# EUROPEAN PATENT SPECIFICATION

(11) **EP 0 924 238 B1**
(45) Date of publication and mention of the grant of the patent: **16.02.2005**
(21) Application number: 98309905.2
(22) Date of filing: 03.12.1998
(51) Int. Cl.: C08G 77/32

(54) **Neutralization method for polyorganosiloxanes**
Verfahren zur Neutralisierung von Polyorganosiloxanen
Procédé de neutralisation de polyorganosiloxanes

(30) Priority: 15.12.1997 US 990417
(43) Date of publication of application: 23.06.1999
(73) Proprietor: DOW CORNING CORPORATION, Midland Michigan 48686-0994 (US)
(72) Inventor: Graiver, Daniel, Midland, Michigan 48640 (US); Tselepis, Arthur James, Midland, Michigan 48640 (US)
(74) Representative: Kyle, Diana

(56) References cited:
- EP-A- 0 129 318

## Description

The present invention is a method for neutralizing a polyorganosiloxane mixture which contains a base. Said method comprises contacting said mixture with a neutralizing amount of a solid organic acid at a temperature above the melting point of said organic acid to form an insoluble adduct of the base with the molten organic acid, lowering the temperature to solidify the residual molten organic acid and then separating the insoluble adduct and the residual solid organic acid from the polyorganosiloxane mixture by standard means for separating solid-liquid mixtures.

Polyorganosiloxanes, in the form of fluids, are crosslinked to form, for example, silicone rubbers and resins. It is important that polyorganosiloxane fluids as well as compositions containing such fluids and components prepared therefrom be stable during storage, shipment and exposure to heat. A typical process for making polyorganosiloxanes involves heating low molecular weight linear polyorganosiloxanes and cyclic polyorganosiloxanes to a temperature above 100°C, in the presence of a base such as potassium silanolate or potassium hydroxide to polymerize the siloxanes to higher molecular weight polyorganosiloxanes. The product of this base catalyzed reaction is an equilibrium mixture comprising as a major portion linear polyorganosiloxanes and as a minor portion cyclic polyorganosiloxanes. The presence of the cyclic polyorganosiloxanes in products is undesirable because they can have sufficiently high vapor pressure to cause problems during use and, therefore, these cyclics are typically removed by heat distillation under reduced pressure. If the base catalyst is not neutralized, additional cyclic siloxanes will be generated during the distillation process in an attempt to maintain equilibrium conditions. In addition, polyorganosiloxanes and compositions comprising them have impaired heat resistance and storage stability when the base catalyst is not sufficiently neutralized.

U.S. Patent 4,157,337 claims the polymerization of a first cyclic siloxane with a second cyclic tetrasiloxane in the presence of a catalyst comprising a potassium hydroxide complexed with a cyclic polyether and neutralizing the catalyst in the reaction mixture after equilibrium.

U.S. Patent 4,250,290 teaches a polymerization reaction in a static mixer wherein cyclic polydimethylsiloxane monomers are treated with a potassium silanolate catalyst and are subsequently neutralized with a silyl phosphate neutralizer.

The present invention provides a method for neutralizing base present in polyorganosiloxane mixtures by using as neutralizing agent a solid organic component selected from an acid anhydride, a carbonate, a ketone and a carboxylic acid having a melting point such that the mixture can be contacted with the solid organic component at a temperature above the melting point of said acid thus neutralization occurs in a homogeneous process containing only liquid reactants. The temperature of the mixture is then lowered below the melting point of the molten organic component thus solidifying the residual molten organic component. Residual solid organic component and the insoluble adduct formed as the neutralization product is then easily separated from the mixture by standard methods for separating solid-liquid mixtures. Because the present neutralization method is run as a homogeneous liquid-phase process, neutralization of the base is accomplished quickly without the use of large stoichiometric excesses of the solid organic component. Separation of residual solid organic component and the insoluble adduct neutralization product from the polyorganosiloxane mixture is readily achieved by cooling the mixture below the melting point of the solid organic component to produce solidification and using standard methods such as filtration to separate the resulting solid-liquid mixture.

The present invention provides a method for neutralizing a polyorganosiloxane mixture comprises (A) contacting a mixture comprising a polyorganosiloxane component and a base component with a neutralizing amount, which is at least stoichiometric equivalence relative to the base, of a solid organic component selected from an acid anhydride, a carbonate, a ketone and a carboxylic acid and having a melting point above 20°C at a temperature above the melting point of the solid organic component to form a molten organic component and an insoluble adduct of the base with the molten organic component, (B) lowering the temperature to solidify the residual molten organic component, and (C) then separating the insoluble adduct and the residual solid organic component from the polyorganiosiloxane mixture.

According to another embodiment, the invention also provides a method for forming a neutralized polyorganosiloxane mixture comprises (A) contacting an organosiloxane oligomer with a base effective as a polymerisation catalyst at a temperature greater than 20°C to form a polyorganosiloxane mixture comprising a polyorganosiloxane component and a base component, (B) contacting the mixture with a neutralizing amount which is at least stoichiometric equivalence relative to the base of a solid organic component selected from an acid anhydride, a carbonate, a ketone and a carboxylic acid and having a melting point which is above 20°C and less than the contact temperature of step (A) thereby forming a molten organic component and an insoluble adduct of the molten organic component with the base, where the temperature of the mixture is maintained within a range greater than the melting point of the solid organic component and the contact temperature of step (A), (C) lowering the temperature of the mixture to solidify residual molten organic component, and (D) then separating the insoluble adduct and residual solid organic component from the polyorganosiloxane.

The present invention is especially useful for neutralizing polyorganosiloxane mixtures where the polyorgansiloxane comprises a hydrocarbyl group bonded to silicon.

The polyorganosiloxane component of the present mixture is any of those known in the art. Generally, the polyorganosiloxane is comprised of repeating units described by formula -(R¹₂SiO)-, where each R¹ is independently selected from the group comprising hydrocarbyl groups comprising less than 12 carbon atoms. The hydrocarbyl group is for example, an alkyl such as methyl, ethyl, propyl and tert-butyl; an aryl such as phenyl; an alkenyl such as vinyl, alkyl and hexenyl; a cycloalkyl such as cyclopentyl and cyclohexyl; a substituted alkyl such as 3,3,3-trifluoropropyl and chloromethyl; and a substituted aryl such as chlorophenyl. The preferred polyorganosiloxane comprises units selected from dimethylsiloxy, methylvinylsiloxy and methylarylsiloxy groups. The number of repeating units denoted by x is normally from two to 100,000.

The polyorganosiloxane is a linear or branched polymer. The polydiorganosiloxane can also be monodisperse or polydisperse. The polydiorganosiloxane can be a homopolymer or a block or random copolymer. The polyorganosiloxane may be end-terminated, for example, with siloxy groups described by formula R¹₂R²₁SiO⁻,where R¹ is as previously described and R² is selected from the group consisting of R¹ and hydroxyl. The polydiorganosiloxane can be, for example, trimethylsiloxy end-terminated polydimethylsiloxane, vinyldimethylsiloxy end-terminated polydimethylsiloxane, vinyldimethylsiloxy end-terminated polydimethyl (vinylmethyl) siloxane copolymer, dimethylhydroxysiloxy end-terminated polydimethylsiloxane, trimethylsiloxy or (3,3,3-trifluoropropyl)dimethylsiloxy end-terminated polydiorganosiloxane having 50 percent of pendant organic groups attached to silicon being methyl and the remainder being 3,3,3-trifluoropropyl and trimethylsiloxy end-terminated polydimethyl (methylphenyl)-siloxane copolymer.

The present method is particularly useful for neutralizing mixtures where the polyorganosiloxane comprises one or more hydrocarbyl groups bonded to silicon. It is well known that strong acids can at high temperatures cleave the Si-C bonds, particularly in silicone aryl linkages. Therefore, polyorganosiloxanes having an aromatic bonded to silicon atoms are typically prepared using a base catalyst and the catalyse is then neutralized with a weak acid. To prevent scission of the Si-C bond during storage and when using polyorganoarylsiloxane, it is necessary to neutralize the base catalyst in a manner such that residual acid is not left in the polyorganoarylsiloxane. The present method offers an effective and convenient method for accomplishing this neutralization.

In a preferred method, the polyorganosiloxane mixture results from the polymerization of cyclic or short-chain polyorganosiloxanes and mixtures thereof, in the presence of a base. Such a mixture can be made by polymerizing cyclic polyorganosiloxanes having on the average three to six organosiloxy units per molecule in the presence of short-chain linear polyorganosiloxanes useful as chain extenders and as endblockers. A preferred polyorganosiloxane mixture for use in the present method results from the potassium silanolate catalyzed polymerization of a mixture comprising linear and cyclic polydimethylsiloxanes, cyclic vinylmethylsiloxanes and a hexamethyldisiloxane endblocker. The preferred polyorganosiloxane mixture used in the present method is a trimethylsiloxy or vinyldimethylsiloxy end-terminated.

The base comprising a portion of the polyorganosiloxane mixture is not critical as long as the base can form an insoluble adduct with the molten organic acid. In a preferred method, the base is an alkali metal hydroxide or alkali metal silanolate. Most preferred is a potassium silanolate or potassium hydroxide base. The concentration of the base in said mixture is not critical and is generally a concentration useful in catalyzing the polymerization of the polyorganosiloxane mixture, for example, up to 1,000 ppm.

The solid organic component selected from an acid anhydride, a carbonate, a ketone and a carboxylic acid useful in the present method is any material which has a melting point lower than the temperature at which significant decomposition of the polyorganosiloxane occurs, forms an insoluble adduct with the base to be neutralized through an acid-base reaction while in the molten state and is solidified by lowering the temperature of the neutralized mixture to allow separation of solids from the mixture by methods for separating solid-liquid mixtures. The solid organic component has a melting point above 20°C. More preferred is a solid organic component with a melting point of 20°C. to 180°C. A solid organic component with a melting point of 35°C. to 150°C. is most preferred.

The chemical nature of the insoluble adduct of the solid organic component with the base is not critical as long as the insoluble adduct is sufficiently insoluble under the conditions of the method to allow separation as a solid from the polyorganosiloxane mixture. Said adduct is, for example, a compound, salt or complex resulting from contact of the base with the solid organic component in the molten state.

By the term "neutralizing amount" of a solid organic component, it is meant any amount capable of neutralizing all or a portion of the base present in the polyorganosiloxane mixture through an acid-base reaction thereby forming an insoluble adduct with the base. Since in the present method the polyorganosiloxane mixture has a temperature above the melting point of said component, the method is run as a homogeneous liquid phase process with very efficient contact of the organic component with the base and thus large excesses of said acid are not required. To ensure optimal neutralization of the base, the solid organic component is added in at least stoichiometric equivalence relative to the base. Preferred is when 1 to 2 stoichiometric equivalents of solid organic component is added relative to the base. Most preferred is adding a stoichiometric amount of said acid relative to the base.

The solid organic component is selected from the group consisting of acids such as undecanoic acid, decanoic acid, lauric acid, 3,4-difluorophenylacetic acid, palmitic acid, stearic anhydride, crotonic acid, a mixture of undecanoic acid, dodecanoic acid and sebacic acid, glutaric acid, 2,6-difluorophenylacetic acid, 2-acetylbenzoic acid, 2,4-difluorophenylacetic acid, 2,5-difluorophenylacetic acid, 1,10-decanedicarboxylic acid, trans-cinnamic acid, sebacic acid, 2,4-hexadienoic acid, diglycolic acid, citric acid, stearic acid and succinic acid; anhydrides such as lauric anhydride, 3-methylglutaric anhydride, 2-acetoxysuccinic anhydride, glutaric anhydride, octadecenylsuccinic anhydride, itaconic anhydride, diglycolic anhydride, succinic anhydride and homophthalic anhydride; carbonates such as ethylene carbonate; and ketones. Preferred solid organic components are succinic anhydride, glutaric acid, citric acid, sorbic acid, undecanoic acid and ethylene carbonate. Succinic anhydride is the most preferred solid organic component.

The method of contacting the polyorganosiloxane mixture with the solid organic component is not critical as long as the temperature of the polyorganosiloxane mixture is above the melting point of the solid organic component thereby forming a molten organic component. The solid organic component can be added to said mixture and the mixture heated to a temperature above the melting point of the solid organic component or the temperature of the polyorganosiloxane mixture may already be above the melting temperature of the solid organic component when added. In a preferred method, the solid organic component is added to a polyorganosiloxane mixture resulting from the base catalyzed polymerization of cyclic and/or linear polyorganosiloxanes at an elevated temperature before cool-down of the mixture below the melting point of the solid organic component has occurred. To insure efficient contact of the molten organic component with the base, it is preferred that the polyorganosiloxane mixture and the organic component be mixed to form an essentially homogeneous mixture. Mixing is achieved by standard methods such as stirring.

The contact time of the molten organic component with the polyorganosiloxane mixture is not critical as long as adequate contact is provided to achieve the required level of neutralization. Generally, a contact time of 1 second to 4 hours is considered useful. More preferred is 5 minutes to 4 hours. Even more preferred is a contact time of 30 minutes to 3 hours. Longer contact times may be used, but in some instances the insoluble complex of the base with the solid organic acid may hydrate causing the complex to solubilize in the polyorganosiloxane mixture and thereby reducing the neutralization effectiveness of the method.

After the molten organic component has contacted the base for the desired amount of time, the mixture temperature is lowered to solidify residual molten organic component. The method of cooling is not critical. Either allowing the mixture to cool to ambient temperature unassisted by external means or providing external cooling to the wall of the container containing the mixture are effective. It is only necessary that the mixture be cooled sufficiently to solidify the molten organic component, however, cooling to lower temperatures is acceptable if desired.

The insoluble adduct and the residual solid organic acid are separated from the polyorganosiloxane mixture by standard methods for separation of solid-liquid mixtures such as settling, centrifugation and filtration. . Filtration is a preferred method for separating the insoluble adduct and the solid organic component from the polyorganosiloxane mixture.

### Example 1

Neutralization of a polydimethylsiloxane fluid with succinic anhydride was evaluated. The polydimethylsiloxane fluid was prepared by adding to a 1.25 L flask, equipped with a stirrer and temperature controller, 50 g of a 2 mPa·s polydimethylsiloxane fluid, 893 g of cyclic polydimethylsiloxane and 1.0 g of potassium silanolate. This mixture was heated to 140°C. and allowed to polymerize for 6 hours and then cooled to room temperature. A 13.3 g aliquot of the polydimethylsiloxane fluid was placed in a beaker with 20 ml of an indicator solution and titrated with 0.1N alchoholic HC1 indicator. The polydimethylsiloxane fluid had a base number of 1.30 mg KOH/g.

To the polydimethylsiloxane fluid prepared above, 0.83 g of succinic anhydride (m.p. 119-120°C) was added and the mixture heated at 120°C. for 5 minutes to completely temperature and filtered to remove crystalline precipitates. A 10.2 g aliquot of the mixture was placed in a beaker with 20 ml of a bromocresol purple indicator solution, prepared by dissolving bromocresol purple in absolute ethyl alcohol (0.5 wt %), and then 6ml of the solution was added to a 1:1 mixture of toluene and n-butyl alcohol in a 3.785 liter container. The polydimethylsiloxane was completely neutralized.

### Example 2

Neutralization of polydimethylsiloxane fluid with glutaric acid was evaluated. To polydimethylsiloxane fluid prepared as in Example 1, 0.93 g of glutaric acid (m.p. 95-98°C.) was added and the mixture headed at 100°C. for 5 minutes to completely melt the glutaric acid. The mixture was cooled to room temperature and filtered to remove yellow crystalline precipitates. An 11.9 g aliquot of the mixture was placed in a beaker with 20 ml of a bromocresol purple indicator solution prepared as described in Example 1. The polydimethylsiloxane was completely neutralized.

### Example 3

Neutralization of a polydimethylsiloxane fluid with citric acid was evaluated. To polydimethylsiloxane fluid prepared as in Example 1, 1.07 g of citric acid (m.p. 152-154°C) was added and the mixture headed at 16°C. for 15 minutes to completely melt the citric acid. The mixture was cooled to room temperature and filtered to remove crystalline precipitates. A 6.0 g aliquot of the mixture was placed in a beaker with 20 ml of a bromocresol purple indicator solution prepared as described in Example 1. The polydimethylsiloxane was completely neutralized.

### Example 4

Neutralization of polymethylsiloxane fluid with 2,4-hexadienoic acid was evaluated. To polydimethylsiloxane fluid prepared as in Example 1, 1.04 g of 2,4-hexadienoic acid (m.p. 135-137°C.) was added and the mixture heated at 140°C. for 10 minutes to completely melt the 2,4-hexadienoic acid. The mixture was cooled to room temperature and filtered to remove crystalline precipitates. A 10.87 g aliquot of the mixture was placed in a beaker with 20 ml of a bromocreosole purple indicator solution prepared as described in Example 1. The polydimethylsiloxane was completely neutralized.

### Example 5

Neutralization of polydimethylsiloxane fluid with undecanoic acid was evaluated. To polydimethylsiloxane fluid prepared as in Example 1, 1.01 g of undecanoic acid (m.p. 28.5°C.) was added and the mixture heated at 50°C. for 5 minutes to completely melt the undecanoic acid. The mixture was cooled to room temperature and filtered to remove crystalline precipitates. An 8.79 g aliquot of the mixture was placed in a beaker with 20 ml of a bromocresol purple indicator solution prepared as in Example 1. The polydimethylsiloxane was completely neutralized.

### Example 5

Neutralisation of polydimethylsiloxane fluid with ethylene carbonate was evaluated. To polydimethylsiloxane fluid prepared as in Example 1, 1,0 g of ethylene carbonate (m.p. 37-39°C.) was added and the mixture headed at 40°C. for 5 minutes to completely melt the ethylene carbonate. The mixture was cooled to room temperature and filtered to remove crystalline precipitates. A 8.77 g aliquot of the mixture was placed in a beaker with 20 ml of a bromocresol purple indicator solution prepared as in Example 1. The polydimethylsiloxane was completely neutralized.

## Claims

1. A method for neutralizing a polyorganosiloxane mixture comprises (A) contacting a mixture comprising a polyorganosiloxane component and a base component with a neutralizing amount, which is at least stoichiometric equivalence relative to the base, of a solid organic component selected from an acid anhydride, a carbonate, a ketone and a carboxylic acid and having a melting point above 20°C, at a temperature above the melting point of the solid organic component to form a molten organic component and an insoluble adduct of the base with the molten organic component, (B) lowering the temperature to solidify the residual molten organic component, and (C) then separating the insoluble adduct and the residual solid organic component from the polyorganosiloxane mixture.

2. A method for forming a neutralized polyorganosiloxane mixture comprises (A) contacting an organosiloxane oligomer with a base effective as a polymerisation catalyst at a temperature greater than 20°C to form a polyorganosiloxane mixture comprising a polyorganosiloxane component and a base component, (B) contacting the mixture with a neutralizing amount which is at least stoichiometric equivalence relative to the base of a solid organic component selected from an acid anhydride, a carbonate, a ketone and a carboxylic acid and having a melting point which is above 20°C and less than the contact temperature of step (A) thereby forming a molten organic component and an insoluble adduct of the molten organic component with the base, where the temperature of the mixture is maintained within a range greater than the melting point of the solid organic component and the contact temperature of step (A), (C) lowering the temperature of the mixture to solidify residual molten organic component, and (D) then separating the insoluble adduct and residual solid organic component from the polyorganosiloxane.

3. A method according to claim 1 or 2 where the melting point temperature of the solid organic component is within a range of 20 to 180°C.

4. A method according to any of claims 1 to 3 where the neutralizing amount of the solid organic component is 1 to 2 stoichiometric equivalents relative to the base.

5. A method according to any of claims 1 to 4 where the polyorganosiloxane comprises units selected from dimethylsiloxy, methylvinylsiloxy and methylarylsiloxy groups.

6. A method according to any of claims 1 to 5 where the solid organic component is selected from succinic anhydride, glutaric acid, citric acid, 2,4-hexadienoic acid, undecanoic acid and ethylene carbonate.

## Patentansprüche

1. Verfahren zur Neutralisation einer Polyorganosiloxanmischung, umfassend (A) Inberührungbringen einer Mischung, die eine Polyorganosiloxankomponente und eine Basenkomponente enthält, mit einer neutralisierenden Menge, die mindestens das stöchiometrische Äquivalent relativ zu der Base ist, einer festen organischen Komponente, ausgewählt aus einem Säureanhydrid, einem Carbonat, einem Keton und einer Carbonsäure, die einen Schmelzpunkt oberhalb von 20°C aufweist, bei einer Temperatur oberhalb des Schmelzpunktes der festen organischen Komponente, um eine geschmolzene organische Komponente und ein unlösliches Addukt der Base mit der geschmolzenen organischen Komponente zu bilden, (B) Erniedrigen der Temperatur, um die verbleibende geschmolzene organische Komponente zu verfestigen, und (C) dann Abtrennen des unlöslichen Addukts und der verbleibenden festen organischen Komponente von der Polyorganosiloxanmischung.

2. Verfahren zur Bildung einer neutralisierten Polyorganosiloxanmischung, umfassend (A) Inberührungbringen eines Organosiloxanoligomers mit einer Base, die als ein Polymerisationskatalysator wirksam ist, bei einer Temperatur von mehr als 20°C, um eine Polyorganosiloxanmischung zu bilden, die eine Polyorganosiloxankomponente und eine Basenkomponente enthält, (B) Inberührungbringen der Mischung mit einer neutralisierenden Menge, die mindestens das stöchiometrische Äquivalent relativ zu der Base ist, einer festen organischen Komponente, ausgewählt aus einem Säureanhydrid, einem Carbonat, einem Keton und einer Carbonsäure, die einen Schmelzpunkt oberhalb von 20°C und kleiner als die Berührungstemperatur aus Schritt (A) aufweist, um dabei eine geschmolzene organische Komponente und ein unlösliches Addukt aus der geschmolzenen organischen Komponente mit der Base zu bilden, wobei die Temperatur der Mischung innerhalb eines Bereichs von höher als der Schmelzpunkt der festen organischen Komponente und der Berührungstemperatur aus Schritt (A) gehalten wird, (C) Erniedrigen der Temperatur der Mischung, um verbleibende geschmolzene organische Komponente zu verfestigen, und (D) dann Abtrennen des unlöslichen Addukts und der verbleibenden festen organischen Komponente von dem Polyorganosiloxan.

3. Verfahren nach Anspruch 1 oder 2, wobei der Schmelzpunkt der festen organischen Komponente innerhalb eines Bereichs von 20 bis 180°C liegt.

4. Verfahren nach einem der Ansprüche 1 bis 3, wobei die neutralisierende Menge der festen organischen Komponente 1 bis 2 stöchiometrische Äquivalente relativ zu der Base beträgt.

5. Verfahren nach einem der Ansprüche 1 bis 4, wobei das Polyorganosiloxan Einheiten, ausgewählt aus Dimethylsiloxy-, Methylvinylsiloxy- und Methylarylsiloxygruppen, enthält.

6. Verfahren nach einem der Ansprüche 1 bis 5, wobei die feste organische Komponente ausgewählt ist aus Bernsteinsäureanhydrid, Glutarsäure, Zitronensäure, 2,4-Hexandiensäure, Undecansäure und Ethylencarbonat.

## Revendications

1. Procédé de neutralisation d'un mélange à base de polyorganosiloxane qui comprend (A) la mise en contact d'un mélange comprenant un composant de polyorganosiloxane et un composant de base avec une quantité neutralisante, qui est d'une équivalence au moins stoechiométrique par rapport à la base, d'un composant organique solide choisi parmi un anhydride d'acide, un carbonate, une cétone et un acide carboxylique et ayant un point de fusion au-dessus de 20°C, à une température au-dessus du point de fusion du composant organique solide pour former un composant organique fondu et un produit d'addition insoluble de la base et du composant organique fondu, (B) l'abaissement de la température pour solidifier le composant organique fondu résiduel, et (C) ensuite la séparation du produit d'addition insoluble et du composant organique solide résiduel du mélange à base de polyorganosiloxane.

2. Procédé de formation d'un mélange à base de polyorganosiloxane neutralisé qui comprend (A) la mise en contact d'un oligomère d'organosiloxane avec une base effective comme catalyseur de polymérisation à une température supérieure à 20°C pour former un mélange à base de polyorganosiloxane comprenant un composant de polyorganosiloxane et un composant de base, (B) la mise en contact du mélange avec une quantité neutralisante qui est d'une équivalence au moins stoechiométrique par rapport à la base, d'un composant organique solide choisi parmi un anhydride d'acide, un carbonate, une cétone et un acide carboxylique et ayant un point de fusion qui est au-dessus de 20°C et inférieur à la température de contact de l'étape (A) en formant ainsi un composant organique fondu et un produit d'addition insoluble du composant organique fondu et de la base, dans lequel la température du mélange est maintenue dans un intervalle supérieur au point de fusion du composant organique solide et la température de contact de l'étape (A), (C) l'abaissement de la température du mélange pour solidifier le composant organique fondu résiduel, et (D) ensuite la séparation du produit d'addition insoluble et du composant organique solide résiduel du polyorganosiloxane.

3. Procédé suivant l'une ou l'autre des revendications 1 et 2, dans lequel la température du point de fusion du composant organique solide se situe dans un intervalle de 20 à 180°C.

4. Procédé suivant l'une quelconque des revendications 1 à 3, dans lequel la quantité neutralisante du composant organique solide est de 1 à 2 équivalents stoechiométriques par rapport à la base.

5. Procédé suivant l'une quelconque des revendications 1 à 4, dans lequel le polyorganosiloxane comprend des unités choisies parmi les groupes diméthylsiloxy, méthylvinylsiloxy et méthylarylsiloxy.

6. Procédé suivant l'une quelconque des revendications 1 à 5, dans lequel le composant organique solide est choisi parmi l'anhydride succinique, l'acide glutarique, l'acide citrique, l'acide 2,4-hexanediénoïque, l'acide undécanoïque et le carbonate d'éthylène.
